# EUROPEAN PATENT SPECIFICATION

(11) **EP 2 163 287 B1**
(45) Date of publication and mention of the grant of the patent: **07.05.2014**
(21) Application number: 07817370.5
(22) Date of filing: 13.12.2007
(51) Int. Cl.: A23F 3/18, B01D 11/02, B01D 3/38

(54) **METHOD AND DEVICE FOR PREPARING SOLUTION ALONG WITH EQUIPMENT FOR PREPARING SCENTED TEA**
VERFAHREN UND VORRICHTUNG ZUR HERSTELLUNG VON LÖSUNG SOWIE EINRICHTUNG ZUR HERSTELLUNG VON AROMATISIERTEM TEE
PROCÉDÉ ET DISPOSITIF PERMETTANT DE PRÉPARER UNE SOLUTION AVEC UN ÉQUIPEMENT POUR PRÉPARER DU THÉ PARFUMÉ

(30) Priority: 08.06.2007 CN 200710074761
(43) Date of publication of application: 17.03.2010
(73) Proprietor: Shenzhen Zofu Technology Co., Ltd., Shenzhen 518057 (CN)
(72) Inventor: YAO, Linlin, Shenzhen Guangdong 518000 (CN)
(74) Representative: Beetz & Partner
(86) International application number: PCT/CN2007/071228
(87) International publication number: WO 2008/148281

(56) References cited:
- WO-A2-03/086566
- CN-A- 1 515 339
- CN-U- 86 210 246
- CN-Y- 2 514 837
- CN-Y- 2 593 776
- CN-Y- 2 850 684

## Description

### BACKGROUND OF THE INVENTION

### Field of the Invention

The present invention relates to a device and method for preparing solution, and more particularly to a method and device for preparing solution which can extract effective components from a solid material, especially flowers and herbs, in place of the traditional "cooking" method.

### Related Art

The existing method for extracting and purifying effective components from a solid material, and preparing solution is mainly by "cooking", for example, decocting drugs and braising soup, in which the raw materials are placed in water and heated, such that the effective components are released from the materials at a high temperature and dissolved into water, thereby forming a solution containing the effective components of the materials as desired. However, the cooking method is required to be manually monitored throughout the whole process, and the prepared solution varies significantly with different operators. Furthermore, during the cooking process, non-volatile material harmful to human body will accumulate in water because water is in boiling state for a long time, and thus the prepared solution will have certain adverse effect on the human body. Moreover, the volatile effective components in the raw material will be volatilized into air through heating, thus leading to the decrease and waste of the effective components.

The applicant has proposed a method and device for preparing solution in Chinese Patent Application No. CN03113538.2 (= CN-A-1515339), in which the solution preparation can be achieved by a cycle process of distillation, absorption, and soaking. However, in the final extraction of the solution, the soaked solution is expelled from the material chamber by high temperature steam. At this time, if the solution is taken while the steam generator is closed, the solution in the fluid container will reflux due to vacuum, and if the solution is taken while the steam generator is open, the high temperature steam may release from the material chamber and hurt the user, thus having potential hazards. Therefore, the patent has shortcomings in the design of the final extraction step of the solution.

### SUMMARY OF THE INVENTION

The present invention is directed to a safe and reliable device and method for extracting solution.

The present invention provides a device for preparing solution, which includes a steam generator, a valve unit with double inlets, an air pump, a material chamber, and a fluid container. A steam outlet of the steam generator is connected to one inlet of the valve unit with double inlets by a pipe, the other inlet of the valve unit with double inlets is connected to the air pump, and an outlet of the valve unit with double inlets is connected to the material chamber. Materials for preparing solution are deposited in the material chamber, and the material chamber has an outlet extending into the space under the liquid level of the fluid container by a pipe.

Preferably, the valve unit with double inlets includes a three way pipe and an on-off valve, the steam outlet of the steam generator is connected to one inlet of the three way pipe by a pipe, the other inlet of the three way pipe is connected to the air pump, and an outlet of the three way pipe is connected to the material chamber by the on-off valve.

Preferably, the device further includes a pressure adjusting valve, which is located in the pipeline between the fluid container and the outlet of the material chamber.

Preferably, the device further includes a condensing tube, which is located in the pipeline between the fluid container and the outlet of the material chamber and is closer to the material chamber.

Preferably, the device further includes a sensor, which is disposed in the pipeline between the steam generator and the material chamber, for measuring parameters of the steam fed to the material chamber.

Preferably, the steam generator further includes a water level controller, for avoiding dry heating of the steam generator.

Preferably, the device further includes a control panel, for controlling the operation of the air pump and the steam generator, and the ON/OFF of the valves.

The present invention further provides a method for preparing solution, which includes the following processing steps.
1) Material distillation: the steam generator feeds the steam into the material chamber by a pipe, so as to distill the material in the material chamber, and the mixed steam after distillation is discharged through the outlet of the material chamber into the solution in the fluid container.
2) Vacuum soaking of material: the on-off valve is turned off to generate vacuum space in the material chamber, such that the solution in the fluid container is sucked through the outlet of the material chamber into the material chamber, and the sucked solution will soak the material in the material chamber.
3) Solution extraction: the air pump is activated and the on-off valve is turned on, such that air generated by the air pump is fed into the material chamber, and the solution in the material chamber is discharged into the fluid container.

Preferably, if the concentration of the prepared solution is inadequate, the concentration of the solution may be increased by cycling the processes of steps 1) to 3).

Preferably, the mixed steam after distillation in the step 1) is led through the outlet of the material chamber, and charged into the solution in the fluid container after condensation treatment of the condensing tube.

The present invention is further directed to an equipment for quickly preparing scented tea.

The present invention provides an equipment for preparing scented tea, which includes a steam generator, a three way pipe, an on-off valve, an air pump, a material chamber, a fluid container, and a control panel. One inlet of the three way pipe is a steam inlet, and the other inlet of the three way pipe is connected to the air pump, and an outlet of the three way pipe is connected to the material chamber by the on-off valve. Flower and herb materials for preparing solution are deposited in the material chamber, and the material chamber has an outlet at the lower part, which extends into the space under the liquid level of the fluid container by a pipe. The control panel is used to control the operation of the air pump and the ON/OFF of the on-off valve.

Preferably, the equipment further includes a plug-pull type steam generator. An outlet of the steam generator is connected to the steam inlet of the three way pipe, a power source and a heating device of the steam generator are connected to the control panel, and the control panel controls the operation of the steam generator.

Preferably, the equipment further includes a condensing tube, which has one end connected to the outlet of the material chamber, and the other end connected to the inlet of the solution container, for cooling the mixed steam.

The device and method according to the present invention can decrease the hazard substance in the solution, adequately extract the effective components contained in the raw materials, and lower the loss of the volatile effective components, by employing a preparation method of alternating distillation and soaking. The use of solution extraction by feeding air by an air pump can ensures that the solution is adequately extracted without scalding the user. Furthermore, the volatilization of the volatile effective components in the fluid container can be further lowered by joining a condensing tube at the outlet of the material chamber.

### BRIEF DESCRIPTION OF THE DRAWINGS

The present invention will become more fully understood from the detailed description given herein below for illustration only, and thus are not limitative of the present invention, and wherein:
FIG 1 is a schematic structural view of a preferred embodiment of a device for preparing solution according to the present invention; and
FIG 2 is a schematic structural view of a preferred embodiment of an equipment for preparing scented tea according to the present invention.

### DETAILED DESCRIPTION OF THE INVENTION

The device and method for preparing solution according to the present invention have the same principle as that in previous patent of the applicant, except that in the present invention, the manner of discharging the solution by expelling with the air fed by a material air pump in the final solution extraction step is more scientific and safe. The present invention will be described in detail with reference to drawings and embodiments below.

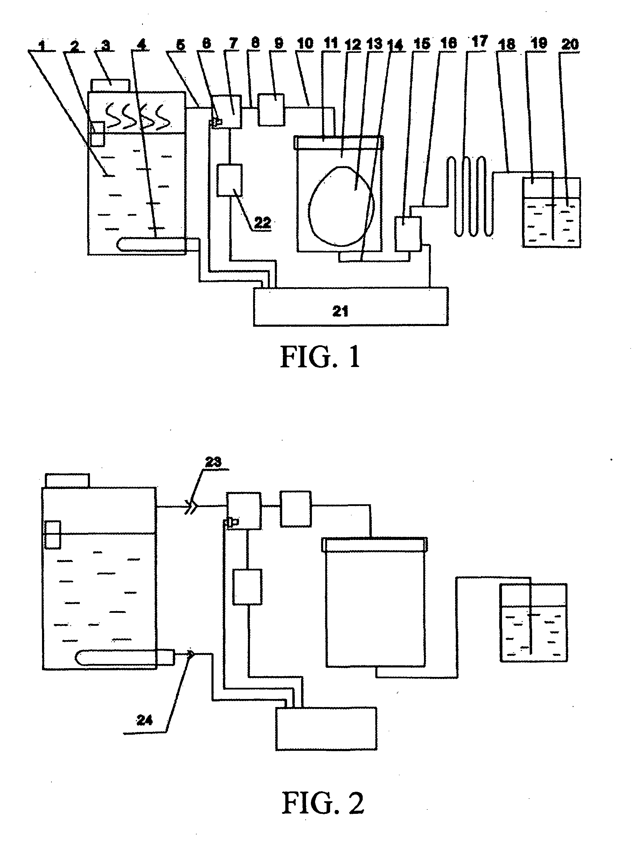

FIG. 1 is a schematic structural view of an embodiment of a device for preparing solution. Water in a steam generator 1 is heated with a heating device 4 to boiling for generating steam, and the steam passes through a first conduit 5 into a three way pipe 7, and then through a second conduit 8, an on-off valve 9, and a third conduit 10 into an upper portion of a substantially sealed material chamber 12, and gradually diffuses throughout the whole material chamber 12, so as to distill a material 13 in the material chamber 12 and expel air therein. During the distillation of the material 13, the volatile components contained the material 13 will volatize, and form a mixed steam with the water steam. Upon the continuous introduction of the fresh steam, the mixed steam is discharged from the outlet at the bottom of the material chamber, passes through a fourth conduit 14, a pressure adjustment valve 15, a fifth conduit 16 into a condensing tube 17 for cooling, then through a sixth conduit 18 into the bottom of a fluid container 19, and thereby directly discharged and dissolved into a solution 20. At this time, the solution 20 contains the volatile components in the extracted material. Till now, the distillation process of the material is complete.

After a period time of distillation, the steam generator 1 stops heating, and the on-off valve 9 is turned off at the same time, so as to discontinue the supply of the steam. Because except for steam, there is no air at all in the material chamber 12, the steam is cooled and condensed into water without the supply of fresh steam, which together with the inner saturated vapor pressure, makes the steam condensed at a very high rate, so a vacuum state is formed in the material chamber in a short time. At this time, the inner pressure of the material 13 releases under a high level of external vacuum through the gap in the material 13. If the material 13 is relatively compact and cannot release pressure in a shorter time, the gap of the material 13 will be torn, and thus the material 13 becomes loose under vacuum. At this time, due to the vacuum in the material chamber 12, the solution 20 in the fluid container 19 passes through the sixth conduit 18, the condensing tube 17, the fifth conduit 16, the pressure adjusting valve 15, the fourth conduit 14, and the outlet of the material chamber into the material chamber 12, and soak the material 13. The loose state and enlarged and increased gaps of the material 13 favors the dissolution of the water-soluble effective components by the solution 20 entering into the interior of the material 13. Till now, the vacuum soaking of the material is completed.

After a period time of dissolution, if the content of the effective components in the solution 20 is desirable, an air pump 22 is activated, and the on-off valve 9 is turned on at the same time. The air fed by air pump 22 passes through the three way pipe 7, the second conduit 8, the on-off valve 9, the third conduit 10 into the material chamber 12, so as to expel the solution 20 out of the material chamber 12, and the solution 20 passes through the fourth conduit 14, the pressure adjusting valve 15, the fifth conduit 16, the condensing tube 17, the sixth conduit 18 into the bottom of the fluid container 19, till the solution is completely expelled into the fluid container 19. At this time, the solution 20 in the fluid container 19 contains both the volatile components in the extracted material 13, and the water soluble components. Till now, the extraction process of the solution is completed.

If the concentration of the solution obtained after dissolution is undesirable, the processes of distillation, vacuum, and soaking can be repeated by introducing steam again, and these processes can be cycled for a several times, till the concentration is desired, and the air pump is activated again to expel the solution into the fluid container. A control panel 21 in FIG. 1 is used to control the operation of the air pump 22 and the steam generator 1, and the ON/OFF of the on-off valve 9 and the pressure adjusting valve 15.

In FIG. 1, the pressure adjusting valve 15 is disposed to adjust the steam pressure in the material chamber, increase the pressure, and raise the temperature in the material chamber, thereby maximizing the extraction of the volatile components, and to generate the pressure difference between the exterior and interior of the material, make the material looser, and obtain a more desirable extraction effect. The disposition of the valve depends on the actual situation in preparation of a product.

The condensing tube 17 mainly functions to cool the steam, and prevent the evolution of the volatile components due to the high temperature of the solution caused by over temperature. The disposition of the condensing tube depends on the actual situation in preparation of a product.

In this embodiment, the three way pipe 7 and the on-off valve 9 constitute a valve unit with double inlets. For the two gas inlets of the valve unit, one inlet is connected to the steam generator 1, and the other one is connected to the air pump 22, and the valve unit can control the induction of the two stream of gas into the material chamber 12.

A temperature sensor or a pressure sensor can be disposed in the three way pipe 7, or in the steam pipeline between the material chamber and steam generator, so as to transmit the temperature and pressure signals of the steam, thus achieving the purpose of over pressure protection and control. The water level controller in the steam generator is used to control the safety problem of dry heating of the steam generator.

FIG. 2 shows a schematic structural view of an equipment for preparing scented tea according to the present invention. The scented tea preparation equipment is mainly used for the auto preparation of the scented tea popular in the world at present. Because the scented tea is mainly composed of, for example, dehydrated fruits, dried flower, and herb leaf, and contains substantially no high compact material, and because the preparation time is short, the pressure adjusting valve and the condensing tube can be omitted. If a condensing tube is equipped in the equipment for preparing scented tea, the condensing tube can be connected to the outlet of the material chamber at one end, and connected to the inlet of the solution container at the other end, for cooling the mixed steam. For the convenience of the user, the steam generator is designed to have a plug-pull type structure, 23 represents the plug-pull of the steam conduit, and 24 represents the plug-pull of the power source and the control circuit. The operation principle is substantially the same as that in the method of preparing the solution above, in which the material can be processed in a combined process of single distillation plus single soaking, or two times of distillation and two times of soaking, which can be achieved by making selection and control on the control panel by the consumer.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

## Claims

1. A device for preparing solution, comprising: a steam generator (1), a valve unit (7, 9) with double inlets, an air pump (22), a material chamber (12), and a fluid container (19); wherein a steam outlet of the steam generator (1) is connected to one inlet of the valve unit (7, 9) with double inlets by a pipe (5), the other inlet of the valve unit (7, 9) with double inlets is connected to the air pump (22), and an outlet of the valve unit (7, 9) with double inlets is connected to the material chamber (12), materials (13) for preparing solution are deposited in the material chamber (12), and the material chamber (12) has an outlet extending into the space under a liquid level of the fluid container (19) by a pipe (18).

2. The device for preparing solution according to claim 1, wherein the valve unit with double inlets comprises a three way pipe (7) and an on-off valve (9), a steam outlet of the steam generator (1) is connected to one inlet of the three way pipe (7) by a pipe, the other inlet of the three way pipe (7) is connected to the air pump (22), and an outlet of the three way pipe (7) is connected to the material chamber (12) by the on-off valve (9).

3. The device for preparing solution according to claim 1, further comprising a pressure adjusting valve (15), located in a pipeline between the fluid container (19) and the outlet of the material chamber (12).

4. The device for preparing solution according to any one of claims 1 to 3, further comprising a condensing tube (17), located in the pipeline between the fluid container (19) and the outlet of the material chamber (12) and closer to the material chamber (12).

5. The device for preparing solution according to any one of claims 1 to 3, further comprising a sensor (6), disposed in a pipeline between the steam generator (1) and the material chamber (12), for measuring parameters of steam fed to the material chamber (12).

6. The device for preparing solution according to any one of claims 1 to 3, wherein the steam generator (1) further comprises a water level controller (2), for avoiding dry heating of the steam generator (1).

7. The device for preparing solution according to any one of claims 1 to 3, further comprising a control panel (21), for controlling the operation of the air pump (22) and the steam generator (1), and the ON/OFF of the valves (9, and 15).

8. A method for preparing solution, comprising:
1) material distillation, wherein the steam generator (1) feeds steam into a material chamber (12) by a pipe to distill a material (13) in the material chamber (12), and mixed steam after distillation is discharged through an outlet of the material chamber into a solution (20) in a fluid container (19);
2) vacuum soaking of material: wherein an on-off valve (9) is turned off to generate vacuum space in the material chamber (12), such that the solution (20) in the fluid container (19) is sucked through the outlet of the material chamber (12) into the material chamber (12), and the sucked solution (20) soaks the material (13) in the material chamber (12); and
3) solution extraction: wherein an air pump (22) is activated and the on-off valve (9) is turned on, such that air generated by the air pump (22) is fed into the material chamber (12), and the solution (20) in the material chamber (12) is discharged into the fluid container (19).

9. The method for preparing solution according to claim 8, wherein if a concentration of the prepared solution is inadequate, the concentration of the solution is increased by cycling the processes of steps 1) to 3).

10. The method for preparing solution according to claim 8 or 9, wherein the mixed steam after distillation in the step 1) is led through the outlet of the material chamber, and charged into the solution (20) in the fluid container (19) after condensation treatment of the condensing tube (17)

11. An equipment for preparing scented tea, comprising: a steam generator (1), a three way pipe (7), an on-off valve (9), an air pump (22), a material chamber (12), a fluid container (19), and a control panel (21); wherein one inlet of the three way pipe (7) is a steam inlet, and the other inlet of the three way pipe (7) is connected to the air pump (22), and an outlet of the three way pipe (7) is connected to the material chamber (12) by the on-off valve (9); flower and herb materials for preparing solution are deposited in the material chamber (12), and the material chamber (12) has an outlet at the lower part and extending into the space under the liquid level of the fluid container (19) by a pipe; and the control panel (21) is used to control the operation of the air pump (22) and the ON/OFF of the on-off valve (9).

12. The equipment for preparing scented tea according to claim 11, further comprising a plug-pull type steam generator (1), wherein a steam outlet of the steam generator (1) is connected to the steam inlet of the three way pipe (7), a power source and a heating device of the steam generator (1) are connected to the control panel (21), and the control panel (21) controls the operation of the steam generator (1).

13. The equipment for preparing scented tea according to claim 11, further comprising a condensing tube (17), wherein the condensing tube (17) has one end connected to the outlet of the material chamber (12), and the other end connected to the inlet of the solution container (19), for cooling the mixed steam.

## Patentansprüche

1. Vorrichtung zur Herstellung einer Lösung, **dadurch gekennzeichnet, dass** sie einen Dampferzeuger (1), eine Doppeleingangs-Ventileinheit (7, 9), eine Gaspumpe (22), eine Materialkammer (12) und einen Flüssigkeitsbehälter (19) umfasst, wobei
- der Dampfaustritt des Dampferzeugers (1) über eine Leitung (5) an einen Eingang der Doppeleingangs-Ventileinheit (7, 9) angeschlossen ist,
- der andere Eingang der Doppeleingangs-Ventileinheit (7, 9) mit der Gaspumpe (22) verbunden ist,
- der Ausgang der Doppeleingangs-Ventileinheit (7, 9) mit der Materialkammer (12) verbunden ist,
- in der Materialkammer (12) ein Material (13) bevorratet ist, aus dem eine Lösung herzustellen ist,
- die Materialkammer (12) eine Auslassöffnung aufweist, die sich über eine Leitung (18) unter den Flüssigkeitsstand des Flüssigkeitsbehälters (19) erstreckt.

2. Vorrichtung zur Herstellung einer Lösung gemäß Anspruch 1, **dadurch gekennzeichnet, dass** die Doppeleingangs-Ventileinheit aus einem T-Stück (7) und einem Schaltventil (9) besteht, wobei der Dampfaustritt des Dampferzeugers (1) über eine Leitung an einen Eingang des T-Stückes (7) angeschlossen ist, während der andere Eingang des T-Stückes (7) mit der Gaspumpe (22) und der Ausgang des T-Stückes (7) über das Schaltventil (9) mit der Materialkammer (12) verbunden ist.

3. Vorrichtung zur Herstellung einer Lösung gemäß Anspruch 1, **dadurch gekennzeichnet, dass** sie ferner ein Druckregelventil (15) umfasst, das sich zwischen dem Flüssigkeitsbehälter (19) und der Leitung der Auslassöffnung der Materialkammer (12) befindet.

4. Vorrichtung zur Herstellung einer Lösung gemäß einem der Ansprüche 1 bis 3, **dadurch gekennzeichnet, dass** sie ferner ein Kondensationsrohr (17) umfasst, das sich auf der der Materialkammer (12) zugewandten Seite der zwischen dem Flüssigkeitsbehälter (19) und der Auslassöffnung der Materialkammer (12) angeordneten Leitung in dieser beefindet.

5. Vorrichtung zur Herstellung einer Lösung gemäß einem der Ansprüche 1 bis 3, **dadurch gekennzeichnet, dass** sie ferner einen Sensor (6) umfasst, der in einer Leitung zwischen Dampferzeuger (1) und Materialkammer (12) eingebaut ist und zum Messen von Parametern des in die Materialkammer (12) eingebrachten Dampfes dient.

6. Vorrichtung zur Herstellung einer Lösung gemäß einem der Ansprüche 1 bis 3, **dadurch gekennzeichnet, dass** im Dampferzeuger (1) zusätzlich ein Wasserstandsregler (2) enthalten ist, der den Dampferzeuger (1) vor Trockenlaufen schützt.

7. Vorrichtung zur Herstellung einer Lösung gemäß einem der Ansprüche 1 bis 3, **dadurch gekennzeichnet, dass** sie ferner eine Steuertafel (21) umfasst, die zum Steuern des Betriebs der Gaspumpe (22) und des Dampferzeugers (1) sowie zum Öffnen bzw. Schließen der Ventile (9, 15) dient.

8. Verfahren zur Herstellung einer Lösung, **dadurch gekennzeichnet, dass** es folgende Verfahrensschritte umfasst:
1) Destillieren eines Materials: der Dampf wird aus einem Dampferzeuger (1) durch eine Leitung in eine Materialkammer (12) eingebracht, um ein in der Materialkammer (12) befindliches Material (13) einer Destillation zu unterziehen, wobei ein destilliertes Dampfgemisch durch eine Auslassöffnung der Materialkammer in eine Lösung (20) in einem Flüssigkeitsbehälter (19) austritt;
2) Einweichen des Materials bei Unterdruck: Durch Schließen des Schaltventils (9) wird in der Materialkammer (12) ein Unterdruck erzeugt, so dass die Lösung (20) im Flüssigkeitsbehälter (19) durch die Auslassöffnung der Materialkammer in diese eingesaugt wird, um das Material (13) in der Materialkammer (12) mit der eingesaugten Lösung (20) einzuweichen;
3) Lösungsextraktion: Es wird die Gaspumpe (22) eingeschaltet und das Schaltventil (9) geöffnet, so dass ein durch die Gaspumpe (22) erzeugtes Gas in die Materialkammer (12) eintritt und die Lösung (20) aus der Materialkammer (12) in den Flüssigkeitsbehälter (19) verdrängt.

9. Verfahren zur Herstellung einer Lösung gemäß Anspruch 8, **dadurch gekennzeichnet, dass** bei unzureichender Konzentration der hergestellten Lösung die Konzentration der Lösung durch zyklisches Ausführen der Schritte 1) bis 3) erhöht wird.

10. Verfahren zur Herstellung einer Lösung gemäß Anspruch 8 oder 9, **dadurch gekennzeichnet, dass** in Schritt 1) das destillierte Dampfgemisch durch die Auslassöffnung der Materialkammer, nach einer Kondensation in einem Kondensationsrohr (17), in die Lösung (20) im Flüssigkeitsbehälter (19) austritt.

11. Kräuterteezubereiter, **dadurch gekennzeichnet, dass** er einen Dampferzeuger (1), ein T-Stück (7), ein Schaltventil (9), eine Gaspumpe (22), eine Materialkammer (12), einen Flüssigkeitsbehälter (19) und eine Steuertafel (21) umfasst, wobei
- der eine Eingang des T-Stückes (7) eine Dampfeintrittsöffnung darstellt,
- der andere Eingang des T-Stückes (7) mit der Gaspumpe (22) verbunden ist,
- der Ausgang des T-Stückes (7) über das Schaltventil (9) mit der Materialkammer (12) verbunden ist,
- in der Materialkammer (12) Kräuter bevorratet sind, aus denen eine Lösung herzustellen ist,
- im Boden der Materialkammer (12) eine Auslassöffnung ausgebildet ist, die sich über eine Leitung unter dem Flüssigkeitsstand des Flüssigkeitsbehälters (19) erstreckt,
- die Steuertafel (21) zum Steuern des Betriebs der Gaspumpe (22) sowie zum Öffnen bzw. Schließen des Schaltventils (9) dient.

12. Kräuterteezubereiter gemäß Anspruch 11, **dadurch gekennzeichnet, dass** er ferner einen steckbaren Dampferzeuger (1) umfasst, dessen Dampfaustritt mit der Dampfeintrittsöffnung des T-Stückes (7) verbunden ist und dessen Stromversorgung und Heizelemente in Steckverbindung mit der Steuertafel (21) stehen, wobei die Steuertafel (21) den Betrieb des Dampferzeugers (1) steuert.

13. Kräuterteezubereiter gemäß Anspruch 11, **dadurch gekennzeichnet, dass** er ferner ein Kondensatrrohr (17) umfasst, das an einem Ende mit der Auslassöffnung der Materialkammer (12) und am anderen Ende mit einer Einlassöffnung des Flüssigkeitsbehälters (19) verbunden ist, um ein Dampfgemisch abzukühlen.

## Revendications

1. Un dispositif de préparation de solution, **caractérisé en ce que** ledit dispositif comprend : un générateur de vapeur (1), une unité de vanne à double entrée (7, 9), une pompe à air (22), une chambre des matériaux (12) et un récipient des liquides (19) ; la sortie des vapeurs dudit générateur de vapeur (1) est connectée via un tube (5) à une entrée de l'unité de vanne à double entrée (7, 9), l'autre entrée de l'unité de vanne à double entrée (7, 9) est reliée à la pompe à air (22), la sortie de l'unité de vanne à double entrée (7, 9) est connectée à la chambre des matériaux (12), les matériaux (13) en attente de préparation sont stockés dans la chambre des matériaux (12), la chambre des matériaux (12) est dotée d'une sortie, ladite sortie est prolongée par un tube (18) jusque sous la surface du liquide du récipient des liquides (19).

2. Dispositif de préparation de solution selon la revendication 1 **caractérisé en ce que** ladite unité de vanne à double entrée est composée d'un té (7) et d'une vanne ouverture/fermeture (9), l'évacuation des vapeurs dudit générateur de vapeur (1) est connectée à une entrée du té (7), l'autre entrée du té (7) est reliée à la pompe à air (22), la sortie du té (7) est reliée à la chambre des matériaux (12) via la vanne ouverture/fermeture (9).

3. Dispositif de préparation de solution selon la revendication 1 **caractérisé en ce qu'**il comprend en outre une vanne de régulation de pression (15) située entre les tubes du récipient des liquides (19) et de la chambre des matériaux (12).

4. Dispositif de préparation de solution selon l'une quelconque des revendications 1 à 3 **caractérisé en ce qu'**il comprend en outre un tube de condensation (17) situé entre les tubes du récipient des liquides (19) et de la chambre des matériaux (12) accolé à un côté de la chambre des matériaux (12).

5. Dispositif de préparation de solution selon l'une quelconque des revendications 1 à 3 **caractérisé en ce qu'**il comprend en outre un capteur (6), ledit capteur (6) est agencé dans le tube situé entre le générateur de vapeur (1) et la chambre des matériaux (12) et mesure les paramètres de la vapeur envoyée à la chambre des matériaux (12).

6. Dispositif de préparation de solution selon l'une quelconque des revendications 1 à 3 **caractérisé en ce que** ledit le générateur de vapeur (1) comprend en outre un contrôleur de niveau d'eau (2) afin d'empêcher toute combustion sèche du générateur de vapeur (1).

7. Dispositif de préparation de solution selon l'une quelconque des revendications 1 à 3 **caractérisé en ce qu'**il comprend en outre un panneau de commande (21) servant à contrôler le fonctionnement de la pompe à air (22) et du générateur de vapeur (1) ainsi que l'ouverture et la fermeture des vannes (9, 15).

8. Une méthode de préparation de solution, **caractérisée en ce que** ladite méthode comprend les étapes de traitement suivantes :
1) Distillation des matériaux : le générateur de vapeur (1) envoie de la vapeur dans la chambre des matériaux (12) via un tube afin d'effectuer un traitement de distillation des matériaux (13) présents dans la chambre des matériaux (12), la vapeur mélangée post-distillation est évacuée par la sortie de la chambre des matériaux (12) dans la solution contenue dans le récipient des liquides (19) ;
2) Immersion à pression négative : la vanne ouverture/fermeture (9) est fermée, un espace à pression négative est formé, la solution (20) contenue dans le récipient des liquides (19) est aspirée dans la chambre des matériaux (12) via la sortie de la chambre des matériaux, la solution (20) aspirée permet d'immerger les matériaux (13) présents dans la chambre des matériaux (12).
3) Extraction de la solution : la pompe (22) est activée et la vanne ouverture/fermeture (9), ouverte, le gaz produit par la pompe (22) pénètre la chambre des matériaux (12) et expulse la solution (20) contenue dans la chambre des matériaux (12) vers le récipient des liquides (19).

9. Méthode de préparation de solution selon la revendication 8 **caractérisée en ce que** si la concentration de solution à préparer n'est pas assez importante, la concentration de la solution peut être augmentée en réitérant cycliquement les processus de traitement 1) à 3).

10. Méthode de préparation de solution selon la revendication 8 ou 9 **caractérisée en ce que** ladite vapeur mélangée post-distillation de l'étape 1) est évacuée dans la solution (20) du récipient des liquides (19) via la sortie de la chambre des matériaux et après traitement de condensation par le tube de condensation (17).

11. Une machine à thé de plantes **caractérisée en ce que** ladite machine à thé comprend : un générateur de vapeur (1), un té (7), une vanne ouverture/fermeture (9), une pompe à air (22), une chambre des matériaux (12), un récipient des liquides (19) et un panneau de commande (21) ; une entrée dudit té (7) correspond à l'arrivée de la vapeur, une autre entrée dudit té (7) est reliée à la pompe à air (22), la sortie du té (7) est connectée via la vanne ouverture/fermeture (9) à la chambre des matériaux (12), la matière première des plantes dont la solution doit être extraite est placée dans chambre des matériaux (12), la partie inférieure de la chambre des matériaux (12) est dotée d'une sortie, ladite sortie est prolongée par un tube jusque sous la surface du liquide contenu dans le récipient des liquides (19) ; le panneau de commande (21) sert à contrôler le fonctionnement de la pompe (22) ainsi que l'ouverture et la fermeture de la vanne (9).

12. Machine à thé de plantes selon la revendication 11 **caractérisée en ce qu'**elle comprend en outre un générateur de vapeur (1) de type extractible, la sortie de vapeur dudit générateur de vapeur (1) est reliée à l'entrée des vapeurs du té (7), l'alimentation électrique et le composant chauffant dudit générateur de vapeur (1) sont connectés au panneau de commande (21), le panneau de commande (21) contrôle le fonctionnement du générateur de vapeur (1).

13. Machine à thé de plantes selon la revendication 11 **caractérisée en ce qu'**elle comprend en outre un tube de condensation (17), une extrémité dudit tube de condensation (17) est reliée à la sortie de la chambre des matériaux (12), l'autre extrémité est reliée à l'entrée du récipient des liquides (19), servant à refroidir la vapeur mélangée.
